# DEMANDE DE BREVET EUROPEEN

(11) **EP 0 720 863 A1**
(43) Date de publication de la demande: **10.07.1996**
(21) Numéro de dépôt: 96420001.8
(22) Date de dépôt: 03.01.1996
(51) Int. Cl.: B01D 46/42, B01D 46/02, B01D 39/08

(54) **Manches filtrantes avec des étiquettes d'identification**

(30) Priorité: 05.01.1995 FR 9500224
(71) Demandeur: GENEVET S.A., F-92080 Paris La Défense (FR)
(72) Inventeur: Bin, Louis, F-95270 Asniere sur oise (FR)
(74) Mandataire: Monnier, Guy

(57) **Abrégé**

L'invention vise à apporter une solution simple et efficace pour idendifier tout au long de leux cycle de vie les manches filtrantes des filtres à manches. A cet effet, une manche filtrante fabriquée avec des matériaux choisis pour résister aux conditions de service spécifiée pour l'utilisation considérée est, suivant l'invention, caractérisée en ce que :
a) elle comporte une étiquette réalisée en matériaux résistant aux conditions de température et de corrosion spécifiées pour ladite manche filtrante,
b) ladite étiquette comporte un marquage résistant aux conditions de température et de corrosion spécifiées pour la manche filtrante,
c) ladite étiquette est incorporée à la manche filtrante par un moyen résistant aux conditions de service spécifiées pour celle-ci.

De préférence l'étiquette est incorporée à la manche filtrante de manière à ne pas constituer une zone filtrante.

## Description

### DOMAINE DE L'INVENTION

La présente invention se réfère aux filtres à manches utilisés dans l'industrie pour épurer l'air ou les gaz pollués notamment par des poussières.

### ETAT DE L'ART

Dans les filtres à manches destinés notamment à l'épuration de l'air ou des gaz pollués, ces fluides traversent le média filtrant avec lequel sont constituées les manches. Les poussières sont séparées de l'air ou des gaz et s'accumulent sur les manches et tendent à les colmater. Les manches sont décolmatées, cycliquement le plus souvent, et les poussières tombent au fond du filtre sous forme d'agglomérats. Les manches sont ainsi soumises à des contraintes variables suivant la nature des poussières, la nature des gaz, et les conditions de filtration (température, perte de charge, etc...) et conception du filtre à manche. Il en résulte pour chaque application des conditions de service auxquelles doit répondre la manche filtrante, y compris pendant le décolmatage.

Dans la plupart des applications, parmi toutes ces conditions de service, les conditions de température et de corrosion empêchent de recourir aux techniques classiques d'identification pour les manches filtrantes. Une telle identification de chaque manche est pourtant nécessaire pour rationaliser l'exploitation de tel filtre : détermination de la durée de vie des manches, vérification de la nature du média filtrant en cas d'incident ou surtout en fin d'utilisation pour déterminer sûrement la filière d'élimination, raccordement entre le comportement in situ et les conditions de fabrication, etc.... Une autre difficulté est liée à la fonction du média filtrant que pourrait créer un marquage sur le média filtrant lui-même qui laisserait passer des poussières contaminant ainsi l'air ou les gaz épurés.

### SOMMAIRE DE L'INVENTION

La présente invention vise à apporter une solution simple et efficace pour identifier tout au long de leur cycle de vie les manches filtrantes des filtres à manches.

A cet effet, la manche filtrante suivant l'invention, fabriquée avec des matériaux choisis pour résister aux conditions de service spécifiées pour l'utilisation considérée, est caractérisée en ce que :
a) elle comporte une étiquette réalisée en un matériau résistant aux conditions de température et de corrosion spécifiées pour ladite manche filtrante,
b) ladite étiquette comporte un marquage résistant aux conditions de température et de corrosion spécifiées pour la manche filtrante considérée,
c) ladite étiquette est incorporée à la manche filtrante par un moyen résistant aux conditions de service spécifiées pour la manche filtrante considérée.

De préférence ladite étiquette est incorporée à la manche filtrante de manière à ne pas constituer une zone filtrante.

### DESCRIPTION DETAILLEE DE L'INVENTION

Une meilleure compréhension de l'invention peut être obtenue maintenant grâce à la description détaillée suivante. On entend, au sens de la présente invention, par manche filtrante un élément réalisé en média filtrant, installé dans un filtre destiné à épurer par filtration un fluide gazeux ou liquide, ce fluide étant pollué par des particules solides et/ou liquides (appelées poussières, aérosol ou matières en suspension). Un tel filtre est qualifié de filtre à manche au sens de la présente invention.

Très souvent les manches filtrantes sont confectionnées en découpant tout d'abord une pièce de forme appropriée dans un média filtrant à l'état de tissus du genre feutre, c'est-à-dire constitués d'une trame assurant la résistance mécanique et recouverts de matériaux fibreux filtrants, par exemple une trame en polytétrafluoréthylène (PTFE) avec des matériaux fibreux en polyphénylène-sulfite (PPS) ou en polyimide (P84) ou en polytétrafluoréthylène (PTFE). Puis cette pièce est cousue avec un fil en matériau approprié pour former une manche telle que conçue pour le filtre considéré, par exemple en polytétrafluoréthylène (PTFE) pour le feutre ci-avant. Suivant les conditions de services auxquelles doit répondre la manche filtrante, un choix est fait pour le tissu et le fil, notamment en choisissant des matériaux adaptés aux conditions de température et de corrosion. Au sens de la présente invention lesdites conditions de service incluent les conditions résultant de la phase de décolmatage.

Suivant l'invention une étiquette est incorporée à cette manche filtrante par un moyen résistant aux conditions de service spécifiées pour ladite manche filtrante. Au sens de l'invention on entend par étiquette une surface sur laquelle peut être réalisé le marquage requis, cette surface étant de préférence non filtrante, c'est-à-dire non traversée par le fluide à épurer lorsque ce fluide traverse ladite manche filtrante pour être filtré.

Dans une forme de réalisation préférée de l'invention, cette étiquette est réalisée avec le média filtrant choisi pour la manche filtrante, par exemple en découpant dans le média filtrant choisi une pièce de forme telle qu'après confection et installation dans le filtre à manches de ladite manche filtrante, une partie de la surface dudit média filtrant ne filtre pas l'air ou les gaz à épurer et constitue ainsi ladite étiquette. Une telle étiquette est ainsi parfaitement incorporée à la manche filtrante par un moyen résistant parfaitement aux conditions de service spécifiées pour ladite manche filtrante, puisqu'il s'agit du média filtrant lui-même. Le marquage résistant aux conditions de température et de corrosion spécifiées pour ladite manche peut être de plusieurs types : marque, numéro de série, numéro d'ordre de fabrication, codes matériaux, caractères alphanumériques, logo, etc... Ce marquage peut être par exemple matérialisé par des points de couture réalisés avec le même fil que celui choisi pour confectionner ladite manche filtrante, sous forme de signes constitués par des lignes droites ou courbes.

Dans une variante préférée où le média filtrant est un feutre, la trame est débarrassée totalement ou partiellement des matériaux filtrants sur la surface constituant l'étiquette. Cela facilite le marquage par des "points" espacés matérialisant des signes constitués par des lignes droites ou courbes. Ces points peuvent être de formes diverses en fonction notamment du mode de réalisation de ces points par procédé mécanique, physique ou chimique.

Cette variante d'incorporation de l'étiquette utilisant le média filtrant lui-même à la fois pour réaliser l'étiquette et comme moyen d'incorporation à la manche filtrante complique la réalisation du marquage puisqu'il peut être nécessaire de manipuler lors du marquage les manches filtrantes elles-mêmes qui peuvent être de dimensions importantes.

Dans une autre variante préférée, la réalisation du marquage est plus simple : l'étiquette est réalisée tout d'abord comme une pièce séparée, en utilisant le média filtrant choisi pour la manche filtrante ou d'autres matériaux résistant aux conditions de température et de corrosion spécifiées pour ladite manche filtrante. Ces étiquettes sont ensuite marquées avec un marquage résistant aux conditions de température et de corrosion spécifiées pour la manche filtrante, par exemple avec un marquage tel que décrit ci-avant. L'étiquette ainsi marquée est incorporée à la manche filtrante de préférence par couture, sur une zone non filtrante de la manche et prévue à cet effet, avec le fil choisi pour confectionner ladite manche filtrante.

Dans une autre variante la couture assurant l'incorporation de l'étiquette à la manche est une partie des coutures nécessaires pour confectionner la manche filtrante elle-même.

Les manches filtrantes peuvent aussi être réalisées, suivant l'état de l'art, en fabriquant le média filtrant lui-même directement sous la forme spécifiée pour la manche filtrante, souvant appelée "cartouche". Ceci évite les phases de découpe et d'assemblage de la manche et permet de prévoir une zone constituant l'étiquette ou une zone où peut être rapportée une étiquette de manière analogue à la description donnée ci-avant pour les manches filtrntes confectionnées à partir d'un média filtrant fabriqué préalablement à la confection de ladite manche filtrante.

## Revendications

1. Manche filtrante pour filtres à manches destinés à l'épuration notamment d'air ou de gaz pollués par des poussières, fabriquée avec des matériaux choisis pour résister aux conditions de service spécifiées pour la manche filtrante, caractérisée en ce que :
a) ladite manche filtrante comporte une étiquette réalisée en matériaux résistant aux conditions de température et de corrosion spécifiées pour ladite manche filtrante,
b) ladite étiquette comporte un marquage résistant aux conditions de température et de corrosion spécifiées pour ladite manche filtrante,
c) ladite étiquette est incorporée à ladite manche filtrante par un moyen résistant aux conditions de service spécifiées pour ladite manche filtrante.

2. Manche filtrante suivant la revendication 1, caractérisée en ce que ladite étiquette est incorporée à ladite manche filtrante sans que ladite étiquette constitue elle-même une zone filtrante.

3. Manche filtrante suivant la revendication 2, caractérisée en ce que ladite étiquette est incorporée à ladite manche filtrante au moyen d'une couture avec un fil résistant aux conditions de service spécifiées pour ladite manche filtrante.

4. Manche filtrante suivant la revendication 3, caractérisée en ce que ladite couture est une partie des coutures nécessaires pour confectionner ladite manche filtrante à partir d'une pièce découpée dans un média filtrant.

5. Manche filtrante suivant la revendication 2, caractérisée en ce qu'elle est confectionnée en découpant dans un média filtrant une pièce de forme telle qu'après confection et installation dans le filtre à manches de ladite manche filtrante, une partie de la surface dudit média filtrant ne constitue pas une zone filtrante et constitue ladite étiquette.

6. Manche filtrante suivant la revendication 5, caractérisée en ce que ledit média filtrant comporte une trame supportant les matériaux filtrants et en ce que ladite surface filtrante constituant ladite étiquette est débarrassée totalement ou partiellement des matériaux filtrants pour réaliser le marquage sur ladite étiquette.

7. Manche filtrante suivant la revendication 6, caractérisée en ce que le média filtrant a une trame en polytétrafluoréthylène (PTFE) recouverte de matériaux fibreux en polyphenylène-sulfite (PPS) ou en polyimide (P84) ou en polytétrafluoréthylène (PTFE) et en ce que le fil utilisé pour confectionner ladite manche filtrante est en polytétrafluoréthylène (PTFE).

8. Manche filtrante suivant l'une quelconque des revendications 2 à 7, caractérisée en ce que ledit marquage est réalisé avec des signes constitués par des lignes droites ou courbes matérialisées par des points de couture.

9. Manche filtrante suivant l'une quelconque des revendicaitons 2 à 7, caractérisée en ce que ledit marquage est réalisé avec des signes constitués par des lignes droites ou courbes matérialisées par des points espacés obtenus par procédé mécanique, physique ou chimique.
